# EUROPEAN PATENT APPLICATION

(11) **EP 3 439 314 A1**
(43) Date of publication of application: **06.02.2019**
(21) Application number: 17183992.1
(22) Date of filing: 31.07.2017
(51) Int. Cl.: H04N 21/85

(54) **COMPOSING PIECES OF AUDIO AND/OR VIDEO INFORMATION**

(71) Applicant: vitaliberty GmbH, 68165 Mannheim (DE)
(72) Inventor: KAISER, Daniel, 68165 Mannheim (DE); KARLE, Alex, 68165 Mannheim (DE); KOCH, Michael, 68165 Mannheim (DE); SOMMERFELD, Kathrin, 68165 Mannheim (DE); STERNSDORF, Björn, 68165 Mannheim (DE)
(74) Representative: Cohausz & Florack

(57) **Abstract**

A method is disclosed comprising: determining one or more parameter values for a set of pieces of audio and/or video information, wherein the one or more parameter values are determined based at least partially on pre-defined or determined according to pre-defined rules profile information, and wherein the set of pieces of audio and/or video information represent a seamless sequence comprising combinable pieces of audio and/or video information; using the parameter values to select one or more pieces of audio and/or video information; determining playback parameter values for the set of pieces of audio and/or video information based at least partially on the determined one or more parameter values; and providing the playback parameter values for performing playback of the set of pieces of audio and/or video information. It is further disclosed an according apparatus, computer program and system.

## Description

### FIELD

The following disclosure relates to the field of composing pieces of audio and/or video information, more specifically to systems, apparatuses, and methods for composing pieces of audio and/or video information, wherein the content of the pieces of audio and/or video information can be varied.

### BACKGROUND

Audio and/or video information comprising e.g. video (and audio) content as a sequence are often times stored as one file. To transfer the audio and/or video information, the file is transferred from a database storing the file to another device. After the full reception of the video file, and storing the video file locally at the device, the video file can be played back by the device. Alternatively, the video can be transferred by streaming it to the other device. A standardized protocol for the transmission of the audio and/or video information can be used, wherein the audio and/or video information are divided into a plurality of packets of the same size. After a pre-defined amount of time, a packet marking an entry point into the audio and/or video information is transferred enabling the following packets to be viewed by a user at the device instantly. However, the content of such a stream is still pre-defined.

Every time e.g. a user requests the video to be viewed, the audio and/or video information need to be transferred. In case the video is stored locally, the audio and/or video information cannot be varied.

Often times, to vary the content of audio and/or video information, several parts of the video sequence may be used again. Thus, to transfer these identical parts of audio and/or video information again, when only some parts of the video sequence change, is unfavorable.

### SUMMARY

Based on this prior art, an enhanced way of composing pieces of audio and/or video information, wherein the content of the pieces of audio and/or video information can be varied easily, would be desirable.

It is thus, inter alia, an object of the invention to achieve enhanced composing of pieces of audio and/or video information, in particular to vary the content of pieces of audio and/or video information in an efficient manner.

According to a first exemplary aspect of the present invention, a method is disclosed, the method comprising:
- determining one or more parameter values for a set of pieces of audio and/or video information, wherein the one or more parameter values are determined based at least partially on pre-defined or determined according to pre-defined rules profile information, and wherein the set of pieces of audio and/or video information represent a seamless sequence comprising combinable pieces of audio and/or video information;
- using the parameter values to select one or more pieces of audio and/or video information;
   determining playback parameter values for the set of pieces of audio and/or video information based at least partially on the determined one or more parameter values; and
- providing the playback parameter values for performing playback of the set of pieces of audio and/or video information.

This method may for instance be performed and/or controlled by an apparatus, for instance a server. Alternatively, this method may be performed and/or controlled by more than one apparatus, for instance a server cloud comprising at least two servers.

According to a second exemplary aspect of the present invention, a method is disclosed, the method comprising:
- obtaining one or more playback parameter values;
- selecting one or more pieces of audio and/or video information for a set of pieces of audio and/or video information based at least partially on the obtained one or more playback parameter values;
- composing a seamless sequence based at least partially on the selected one or more pieces of audio and/or video information, and on the one or more playback parameter values.

This method may for instance be performed and/or controlled by an electronic device, e.g. a mobile terminal. For instance, the method may be performed and/or controlled by using at least one processor of the electronic device.

According to a further exemplary aspect of the invention, a computer program is disclosed, the computer program when executed by a processor causing an apparatus, for instance a server, to perform and/or control the actions of the method according to the first exemplary embodiment.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first exemplary embodiment. In the following, the apparatus disclosed shall also be referred to as "first apparatus".

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary embodiment. The apparatus disclosed may for instance be the first apparatus.

According to a further exemplary aspect of the invention, an electronic device is disclosed, comprising at least one processor and at least one memory including computer program code, the at least one memory and the computer program code configured to, with the at least one processor, cause an electronic device, for instance the electronic device, at least to perform and/or to control the method according to the second exemplary embodiment. The apparatus disclosed may for instance be the second apparatus.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system is disclosed, comprising:
an apparatus according to any aspect of the invention as disclosed above, and an electronic device according to any aspect of the invention as disclosed above, wherein the electronic device is configured to receive the determined playback parameter values.

In the following, exemplary features and exemplary embodiments of all aspects of the present invention will be described in further detail.

One or more parameter values for a set of pieces of audio and/or video information are determined. The determining may for instance comprise a step of obtaining the profile information. The profile information may for instance be obtained e.g. received from another apparatus that is different from the first apparatus, e.g. another server. The profile information may for instance be received based at least partially on a request, e.g. send from the first apparatus (e.g. the server) to the other server. Based on the request, the other server may for instance send the profile information to the first apparatus (e.g. the server). The profile information may for instance comprise at least a part being indicative of parameters associated with one or more pieces of audio and/or video information. The one or more pieces of audio and/or video information may for instance represent audio and/or video information (e.g. audio and/or video snippets), which may for instance be combinable pieces capable of forming a seamless sequence representing audio and/or video to be played back. The determined one or more parameter values may for instance be indicative of specific information, based on which, at least partially, one or more pieces of audio and/or video information can be clearly selected. Further, the one or more parameter values may for instance be indicative of other specific information, based on which, at least partially, one or more playback parameter values can be clearly determined. For instance, the profile information may comprise one or more pieces of information being indicative of preferences of a user with respect to e.g. an area of interest of the user. Corresponding to the area of interest, the one or more parameter values are determined. Based on the determined one or more parameter values, e.g. one or more pieces of audio and/or video information can be selected, e.g. the one or more pieces of audio and/or video information comprising content of said area of interest. Further, the profile information may for instance comprise one or more pieces of information representing a certain level the user has (e.g. achieved) in said area of interest. The profile information may for instance be adaptable. The profile information may for instance be adaptable during a playback of a composed seamless sequence. For instance, the profile information may for instance be adapted during such a playback of the composed seamless sequence and comprise or being indicative of an information that a user is not interested in the content of the seamless sequence being played back. Based on this information, the playback of the composed seamless sequence may for instance be skipped. For instance, the user may provide a manual reaction (e.g. user input) during or after the playback of a seamless sequence, e.g. with the content of a workout. Such a user input may for instance have influence of one or more following seamless sequences to be composed and to be played back by a user, which may for instance be performed and/or controlled according to a method of all aspects of the present invention. Corresponding to said level, e.g. playback parameter values may be determined (and/or varied in case an adaptation of playback parameters is performed), e.g. in order to take into account said level and vary the content of the one or more pieces of audio and/or video information.

The profile information is pre-defined or determined according to pre-defined rules. The profile information may for instance be adapted and/or updated, in case new information may for instance be added to the profile information, or comprised information of the profile information may for instance be changed according to new information. The adding of new information to the profile information or the changing of comprised information of the profile information may for instance be done during or after a playback of a composed seamless sequence, e.g. according to the second exemplary aspect of the present invention. The profile information may for instance be indicative of preference values influencing which one or more parameter values are determined for a set of pieces of audio and/or video information. For instance, the profile information may for instance represent defined requirements, e.g. of a user, for the set of pieces of audio and/or video information to be provided (e.g. to the electronic device e.g. of the user).

A seamless sequence as referred to in this specification refers to one or more pieces of audio and/or video information which - when played back - form a viewable sequence which seems to be one steady video (e.g. moving images) and audio (e.g. spoken voice, music, sound effects to name but a few non-limiting examples). The seamless sequence may for instance be represented by a clip. The formulation, "the seamless sequence seems to be one steady video" as used herein, refers to the fact that the steady video can comprise one or more cuts connecting at least two different scenes of the steady video and still "seem to be one steady video".

The seamless sequence may for instance be represented by a datastream or data file. The datastream and/or the data file may for instance comprise one or more parts of audio and/or video information. In case of the data file, the data file may comprise one or more audio and/or video file, which may for instance be comprise by the data file representing a container for the one or more audio and/or video files. In case of the data stream, the datastream may comprise one or more parts of the stream representing audio and/or video information. Each of the one or more parts of the stream representing audio and/or video information may for instance be converted to a dedicated audio and/or video file. Each audio and/or video file may for instance be stored, e.g. by the electronic device after the reception of each audio and/or video file.

The datastream and/or the data file may for instance be provided to the electronic device. Upon receiving the provided datastream and/or data file, the electronic device may for instance playback the datastream and/or the data file. In case the data file is received

Based on the determined parameter values, one or more pieces of audio and/or video information are determined (e.g. selected). For instance, the parameter values may for instance being indicative of one or more specific pieces of audio and/or video information. These one or more pieces of audio and/or video information may for instance be suitable to be composed into the set of pieces of audio and/or video information.

According to an exemplary embodiment of the first aspect of the present invention, the method further comprises:
- composing the seamless sequence based at least partially on the selected one or more pieces of audio and/or video information, and on the one or more playback parameter values.

The set of pieces of audio and/or video information may for instance be composed based at least partially on the selected one or more pieces of video information. Additionally, the set of pieces of audio and/or video information is composed based at least partially on the determined playback parameter values. For instance, one or more pieces of audio and/or video information may for instance be selected but may not be suitable to be composed into the set of pieces of audio and/or video information, e.g. due to not being able to represent a seamless sequence. For instance, the determined parameter values may comprise a value being indicative of a category and/or type (e.g. types i) to v) according to an exemplary embodiment of the present invention, more details are described later on in this specification). In this case, in order for the set of pieces of audio and/or video information to represent a seamless sequence, only one or more pieces of audio and/or video information e.g. of the same category may be composed into the set of pieces of audio and/or video information.

The composing may for instance be performed by checking whether or not the selected pieces of audio and/or video information can form a seamless sequence or not. For instance, each piece of audio and/or video information may for instance be associated with an attaching information being indicative of which piece or which pieces of the audio and/or video information may be attached in front or after the piece of audio and/or video information.

In this way, the amount of data associated with the audio and/or video information can be provided (e.g. output) in order for a user to view the provided sequence of the audio and/or video information can be minimized. Further, by providing (e.g. outputting) playback parameter values which may use separate pieces of audio and/or video information instead of a complete video file, each time at least some pieces of the audio and/or video information can be used over again. Thus, the amount of data is minimized. Further, the speed of usage for a user is enhanced, since less amount of data has to be transferred since e.g. pieces of audio and/or video information already transferred can be used again. Further, the content comprised by the pieces of audio and/or video information can be varied based on the playback control parameter allowing for a change of the content comprised by the pieces of audio and/or video information while using the same pieces of audio and/or video information. More details in this regard will be given in the following specification.

In an exemplary embodiment, one or more audio identifiers may for instance be associated with one or more pieces of audio information of the set of pieces of audio and/or video information. Additionally or alternatively, one or more video identifiers may for instance be associated with one or more pieces of video information of the set of pieces of audio and/or video information. Additionally or alternative, only one of the one or more audio identifiers may for instance be associated with one piece of audio information. Additionally or alternative, only one of the one or more video identifiers may for instance be associated with one piece of video information. In this way, the order of the seamless sequence of the set of pieces of audio and/or video information does not conflict.

Further, playback parameter values may for instance be determined for the composed set of pieces of audio and/or video information. The playback parameter values may for instance be determined based at least partially on the determined one or more parameter values. The playback parameter values may for instance comprise parameters for the playback of the set of pieces of audio and/or video information. The playback parameter values may for instance be used for varying, controlling and/or adapting the playback of the set of pieces of audio and/or video information. The playback parameter values may for instance comprise one or more control parameters. The playback parameter values may for instance comprise one or more of the following types i) to vi) of control parameters:
i) speed control parameter varying the speed of the play back of at least a part of one or more pieces of the set of pieces of audio and/or video information;
ii) duration control parameter varying the duration of at least a part of one or more pieces of the set of pieces of audio and/or video information;
iii) looping control parameter influencing the repetition of one or more pieces of the set of pieces of audio and/or video information;
iv) backwards control parameter varying one or more pieces of the set of pieces of audio and/or video information to be played back backwards;
v) delay control parameter influencing the play back of one or more pieces of the set of pieces of audio and/or video information to be played back after a delay time has elapsed;
vi) pausing control parameter causing one or more pieces of the set of pieces of audio and/or video information to be paused for a pre-defined amount of time at a pre-defined position of the one or more pieces of the set of pieces of audio and/or video information.

In this way, the sequence may for instance be representative of different content while the same pieces of audio and/or video information are used.

The determined playback parameter values are then provided (e.g. outputted), e.g. to an electronic device or to another apparatus that transfers the playback parameter values to the electronic device.

The electronic device may for instance be portable (e.g. weigh less than 5, 4, 3, 2, or 1 kg). The electronic device may for instance be at least temporarily (e.g. in removable form) or permanently installed in a vehicle. The vehicle may for instance be a car, a truck, a motorcycle, a bicycle, a boat or a plane, to name but a few non-limiting examples. The electronic device may for instance comprise or be connectable to a display for displaying audio and/or video information to a user. The electronic device may for instance comprise or be connectable to means for outputting sound, e.g. in the form of spoken commands (e.g. voice) or information, in the form of music, and/or in the form of sound effects.

The playback parameter values may for instance comprise information identifying pieces of audio and/or video information required for the playback (e.g. a so-called playlist to name but one non-limiting example).

The provided playback parameter values are thus very small in size and does not produce a heavy amount of traffic, e.g. when being transferred from one apparatus (e.g. the server) to another (e.g. the electronic device e.g. of the user).

According to an exemplary embodiment of all aspects of the present invention, the playback parameter values are indicative of control parameters for one or more pieces (of audio and/or video information) of the set of pieces of audio and/or video information, wherein the control parameters allow the play back of the composed one or more pieces (of audio and/or video information) of the set of pieces of audio and/or video information to be varied (e.g. influenced or changed).

For instance, the playback parameter values may be indicative of a repeating of at least one piece or a part thereof of the set of pieces of audio and/or video information. The playback parameter values may for instance be indicative of a slowing down and/or speeding up of the playback of one or more pieces or a part thereof of the set of pieces of audio and/or video information. In this way, at least one part of the seamless sequence may for instance be repeated one or more times while remaining the sequence to be seamless. This can be achieved by the one or more pieces of audio and/or video information comprising content which can be seamlessly attached to one another, even the same sequence may for instance be seamlessly attached to another instance of the same sequence.

For instance, the seamless sequence or a part thereof may for instance be varied according to the playback parameters values by slowing down or speeding up the playback, and/or by pausing the playback. In case the playback parameter values are indicative of a pausing of the playback of at least a part of the sequence, playback of audio may for instance not be paused so that it seems that the sequence is continuing and is a seamless sequence. This may for instance allow to vary the content of the sequence of the set of pieces of audio and/or video information - which is viewable by the user e.g. on the electronic device - but the same set of pieces of audio and/or video information (e.g. as audio and/or video modules) is used.

Additionally or alternatively, the profile information may for instance comprise a set of rules specifying whether some or each of pieces of the set of pieces of audio and/or video information are played back or not. For instance, some of the pieces of audio and/or video information may be only played back the very first time to be viewed by the user. Some of the pieces of audio and/or video information may for instance be played back only a pre-defined number of times (e.g. only the first and second time to be viewed by the user). Some of the pieces of audio and/or video information may for instance be played back every time to be viewed by the user. Whether or not a piece of audio and/or video information is played back in case it is comprised by the set of pieces of audio and/or video information may for instance depend on the content of the piece of audio and/or video information. For instance, after being viewed the first (e.g. and/or second time), the content of the piece of audio and/or video information may be known by the user and thus being not of interest anymore. In this way, the content comprised by the seamless sequence can be varied while using identical pieces of audio and/or video information (e.g. even in the same chronological order). According to an exemplary embodiment of the second aspect of the present invention, the play back of the one or more pieces of the set of pieces of audio and/or video information is varied by one or more of the following types i) to vi) of control parameters:
i) speed control parameter varying the speed of the play back of at least a part of one or more pieces of the set of pieces of audio and/or video information;
ii) duration control parameter varying the duration of at least a part of one or more pieces of the set of pieces of audio and/or video information;
iii) looping control parameter influencing the repetition of one or more pieces of the set of pieces of audio and/or video information;
iv) backwards control parameter varying one or more pieces of the set of pieces of audio and/or video information to be played back backwards
v) delay control parameter influencing the play back of one or more pieces of the set of pieces of audio and/or video information to be played back after a delay time has elapsed;
vi) pausing control parameter causing one or more pieces of the set of pieces of audio and/or video information to be paused for a pre-defined amount of time at a pre-defined position of the one or more pieces of the set of pieces of audio and/or video information.

One control parameter of a respective type i) to vi) may for instance be used to vary more than one piece of audio and/or video information, or at least a part of each respective piece of audio and/or video information.

According to an exemplary embodiment of all aspects of the present invention, each piece of the set of pieces of audio and/or video information is a playable datastream containing audio and/or video information.

According to an exemplary embodiment of all aspects of the present invention, the playable datastream is a streamable file or a not streamable file.

The streamable file may for instance contain audio and/or video information, wherein not all data of the streamable file needs to be received in order to play back the received part of the streamable file. In contrast, the not streamable file may for instance contain pieces of audio and/or video information, wherein in order to play back the pieces of audio and/or video information of the not streamable file, the whole not streamable file needs to be received. Before receiving all of the data of the not streamable file, a playback - even of a part of the audio and/or video information of the not streamable file - is not possible. The not streamable file may for instance be a container comprising one or more audio and/or video files of pre-defined file formats (e.g. avi, h.264, mp4 to name but a few non-limiting examples).

According to an exemplary embodiment of all aspects of the present invention, each respective piece of the set of pieces of audio and/or video information is associated with one or more playback parameter values.

The playback parameter values may for instance be associated with a plurality of pieces of audio and/or video information in case each of the plurality of pieces of audio and/or video information should be varied accordingly. Additionally or alternatively, the playback parameter values are associated with one piece of the set of pieces of audio and/or video information, wherein the one piece of the set of pieces of audio and/or video information may for instance be varied corresponding to the playback parameter values.

According to an exemplary embodiment of all aspects of the present invention, the playback of the composed set of pieces of audio and/or video information is performed by transmitting the required pieces of audio and/or video information as they are played back.

At least a part to be played back may for instance be a piece of video information and/or at least another part to be played back may for instance contain audio information. These parts may for instance be comprised by a file provided (e.g. transferred) and/or be one or more pointers to pieces of audio and/or video information, which may for instance be transferred prior to the file comprising at least a part to be played back of a piece of video information and/or at least another part to be played back of a piece of audio information. These parts may for instance be stored locally, e.g. at the electronic device. The transferring may for instance be to the electronic device, e.g. from the first apparatus (e.g. the server) or from another apparatus (e.g. another server) which is caused to perform the transferring. The pieces of audio and/or video information to be transferred may for instance be stored in a database. The database may for instance be connectable to the first apparatus (e.g. the server) or to the other apparatus (e.g. another server).

Alternatively, the pieces of audio and/or video information to be transferred are transferred prior to the playing back of the set of pieces of audio and/or video information. In case the pieces of audio and/or video information to be transferred are transferred prior to the playing back, the pieces of audio and/or video information transferred may for instance be stored (e.g. by the electronic device which has received the pieces of audio and/or video information). In case the playback parameter values are indicative of the play back of a piece of audio and/or video information which has been transmitted (e.g. previously to performing the method according to exemplary aspects of the present invention to the electronic device), the one or more pieces of audio and/or video information already stored are not needed to be transferred again or do not need to be streamed during the play back of the composed set of pieces of audio and/or video information. Thus, the sequence to be played back may for instance comprise one or more pieces of audio and/or video information already stored e.g. at the electronic device (which may for instance perform the playback of the set of pieces of audio and/or video information), and may further comprise one or more pieces of audio and/or video information which are streamed during the play back (e.g. to the electronic device) and/or are transferred (e.g. to the electronic device) directly before the play back of the set of pieces of audio and/or video information is performed.

According to an exemplary embodiment of all aspects of the present invention, the one or more parameter values comprise a value being indicative of the order of the set of pieces of audio and/or video information.

For instance, each piece of audio and/or video information being comprised by the set of pieces of audio and/or video information may be associated with an identifier (e.g. sequence identifier) being comprised by the set of pieces of audio and/or video information. For instance, the sequence identifier may be a numbering, wherein in case the set of pieces of audio and/or video information should be played back, the pieces of audio and/or video information are played backed in the order of the associated numbering.

The determined playback parameter values may for instance comprise one or more of said identifiers of the pieces of audio and/or video information of the set of pieces of audio and/or video information.

According to an exemplary embodiment of all aspects of the present invention, each respective piece of audio and/or video information of the set of pieces of audio and/or video information comprises at least two timestamps defining a position within a respective content of the respective piece of audio and/or video information of the set of pieces of audio and/or video information, wherein the duration of the play back of a part of the respective piece of audio and/or video information defined by at least two consecutive timestamps is varied by the one or more playback parameter values.

Additionally or alternatively, a player used to play back each respective piece of audio and/or video information of the set of pieces of audio and/or video information comprises a timeline, wherein the timeline of such a player (e.g. an application of an electronic device usable for playing back each respective piece of audio and/or video information of the set of pieces of audio and/or video information) comprises at least two timestamps defining a position within a respective content of the respective piece of audio and/or video information of the set of pieces of audio and/or video information. The position within the respective content of the respective piece of audio and/or video information of the set of pieces of audio and/or video information may for instance be defined by a duration of the respective piece of audio and/or video information of the set of pieces of audio and/or video information. The duration of the play back of a part (e.g. represented by content) of the respective piece of audio and/or video information defined by at least two consecutive timestamps is varied by the one or more playback parameter values.

For instance, the one or more pieces of audio and/or video information, which may for instance be selected for the set of pieces of audio and/or video information, may be associated with a certain duration the playback of the entire piece of audio and/or video information between two consecutive timestamps of the piece of audio and/or video information takes. This may for instance be defined based on the encoding of the respective piece of audio and/or video information. The one or more determined playback parameter values may for instance vary the duration of the playback between two consecutive timestamps. A variation of the playback duration between two consecutive timestamps can be achieved. It is mentioned that in case the duration of the playback between two consecutive timestamps is varied, the duration between two other consecutive timestamps of the same piece of audio and/or video information may not be varied. In this way, the content of the set of pieces of audio and/or video information lying in between the two consecutive timestamps may for instance be slowed down or sped up.
According to an exemplary embodiment of the second aspect of the present invention, the composed seamless sequence is represented by one playable datastream containing audio and/or video information.

According to an exemplary embodiment of all aspects of the present invention, the composed seamless sequence is played back by an audio and/or video player. The audio and/or video player may for instance be executable by the electronic device. The audio and/or video player may for instance be an application executable or comprised by the operating system of the electronic device. The audio and/or video player of the electronic device may for instance be part of a library executable in order to play back a file or a datastream comprising audio and/or video content. By composing pieces of audio and/or video information based at least partially on the selected one or more pieces of audio and/or video information, and on the one or more playback parameter values, and playing back the composed pieces of audio and/or video information by the audio and/or video player, the audio and/or video player does not need to be changed at all. Thus, a standard audio and/or video player comprised by the electronic device can be used for performing and/or controlling exemplary embodiments according to all aspects of the present invention.

According to an exemplary embodiment of all aspects of the present invention, the profile information is adaptable according to predefined rules or is determined according to predefined rules.

The profile information may for instance be updated so that information comprised by the profile information, e.g. information being used for determining the one or more parameter values, may be updated (e.g. changed) and/or new information (e.g. values) may be added to the profile information, and/or information (e.g. values) comprised by the profile information may be deleted, e.g. due to an outdating of them. In this way, the set of pieces of audio and/or video information representing a sequence provided e.g. to the user is composed according to e.g. preferences of the user.

According to an exemplary embodiment of all aspects of the present invention, the playback of the composed set of pieces of audio and/or video information is performed based at least partially on an obtained request.

Based on the obtained (e.g. received) request (e.g. received from the electronic device), the determining of the parameter values may for instance be performed. For instance, the user may request to view a seamless sequence, the corresponding request may for instance be sent to the first apparatus (e.g. the server).

According to an exemplary embodiment of all aspects of the present invention, the one or more parameter values are associated with at least one identifier for each piece of the set of pieces of audio and/or video information.

The at least one identifier may for instance be an ascending numbering or a unique label associated with each of the pieces of audio and/or video information for making each piece of the pieces of audio and/or video information uniquely identifiable. In this way, a specific piece of audio and/or video information may for instance be selected, and/or transferred, and/or streamed from the location it is stored, e.g. to the electronic device, e.g. for being played back and being viewable by the user.

According to an exemplary embodiment of all aspects of the present invention, the one or more parameter values comprise at least one indication whether the pieces of audio and/or video information can form a seamless sequence or not.

The at least one identifier may for instance be the attaching information being indicative of which piece or which pieces of the audio and/or video information may for be attached in front or after one specific piece of audio and/or video information.

Whether or not one piece the pieces of audio and/or video information can be directly attached to another piece of audio and/or video information may for instance depend on the position the piece of audio and/or video information may take in the seamless sequence. For instance, the very first piece of audio and/or video information of the set of pieces of audio and/or video information may be any of the pieces of audio and/or video information. The second piece of audio and/or video information of the set of pieces of audio and/or video information may be needed to be determined whether or not this next piece of audio and/or video information can be attached to the first piece of audio and/or video information form the seamless sequence and so on.

According to an exemplary embodiment of all aspects of the present invention, the one or more pieces of audio and/or video information are associated with a category, wherein the one or more parameter values specify that at least one piece of the pieces of audio and/or video information of one or more pre-defined or determined according to pre-defined rules categories is comprised by the set of pieces of audio and/or video information.

According to an exemplary embodiment of all aspects of the present invention, the categories are associated with one or more of the following types i) to v) of categories with which each piece of audio and/or video information is associated with:
i) beginning part of the sequence;
ii) one or more pre-beginning parts of the sequence;
iii) one or more main parts of the sequence;
iv) one or more pre-final parts of the sequence;
v) final part of the sequence.

Each piece of audio and/or video information may for instance be a part of the beginning or the main part of a seamless sequence. Thus, each piece of audio and/or video information may for instance be associated with more than one category of the types i) to v).

Further, one or more pieces of audio and/or video information associated with one of the types i) to v) of the categories may for instance be comprised by the set of pieces of audio and/or video information for representing a seamless sequence. For instance, one or more pieces of audio and/or video information of the type iii) representing one or more main parts of the seamless sequence may for instance be comprised by the set of pieces of audio and/or video information in order to contain content of interest for the viewing user.

According to an exemplary embodiment of all aspects of the present invention, the one or more parameter values comprise at least one number information indicative of whether one or more pieces of audio and/or video information are restricted by a number of playbacks or not.

For instance, in case the pieces of the set of pieces of audio and/or video information are associated with a category, e.g. the type i) of one or more beginning part of the sequence may for instance be only played back the very first time it is viewed by the user, or only the first and the second time or every time it is viewed by the user. The number of times may for instance be further dependent upon the type iii) of one or more main parts of the sequence. For instance, the one or more main parts of the sequence may be influencing if e.g. a beginning part of the sequence is comprised by the set of pieces of audio and/or video information or not. In case the content of e.g. a main part of the sequence requires a beginning part of the sequence for the content of the main part to be understandable, the beginning part of the sequence may for instance be provided to the electronic device to be viewed by the user at least the very first time the content of the main part is comprised by the set of pieces of audio and/or video information. For achieving this connection between different types i) to v) of categories, at least one of the pieces of audio and/or video information may for instance be associated with a certain type of information comprised by said piece (e.g. an identifier in header field of the piece of audio and/or video information being indicative of said connection to at least one other piece of audio and/or video information.

According to an exemplary embodiment of all aspects of the present invention, one piece of video information of the set of pieces of audio and/or video information is composed to be played back with one or more pieces of audio information.

The one piece of video information of the set of pieces of audio and/or video information may for instance be played back with one or more pieces of audio information simultaneously. Further, the one piece of video information of the set of pieces of audio and/or video information may for instance be played back with more than one piece of audio information simultaneously. For instance, a first piece of audio information may comprise information in the form of spoken commands, and a second piece of audio information may comprise information in the form of music. A piece of video information may for instance be played back simultaneously with the first piece of audio information and the second piece of audio information. Further, the set of pieces of audio and/or video information may for comprise more than one piece of video information. Each of the pieces of video information may be played back simultaneously with more than one piece of audio information. Further, a first piece of video information of the set of pieces of audio and/or video information may be played back with more than one piece of audio information, wherein the number of the more than one pieces of audio information may vary from the number of pieces of audio information which are played back simultaneously with a second piece of video information of the same set of pieces of audio and/or video information comprising the first piece of video information.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a flowchart showing an example embodiment of a method according to the first exemplary aspect of the present invention, for instance performed by server 110 of Fig. 1;
- Fig. 3: a schematic block diagram of an apparatus according to an exemplary aspect of the present invention;
- Fig. 4a, b: a schematic illustration of a set of pieces of audio and/or video information, for instance being used in a method according to the first and/or second exemplary aspect of the present invention;
- Fig. 5: a flowchart showing an example embodiment of a method according to the first exemplary aspect of the present invention, for instance performed by server 110 of Fig. 1.

### DETAILED DESCRIPTION

The following description serves to deepen the understanding of the present invention and shall be understood to complement and be read together with the description as provided in the above summary section of this specification.

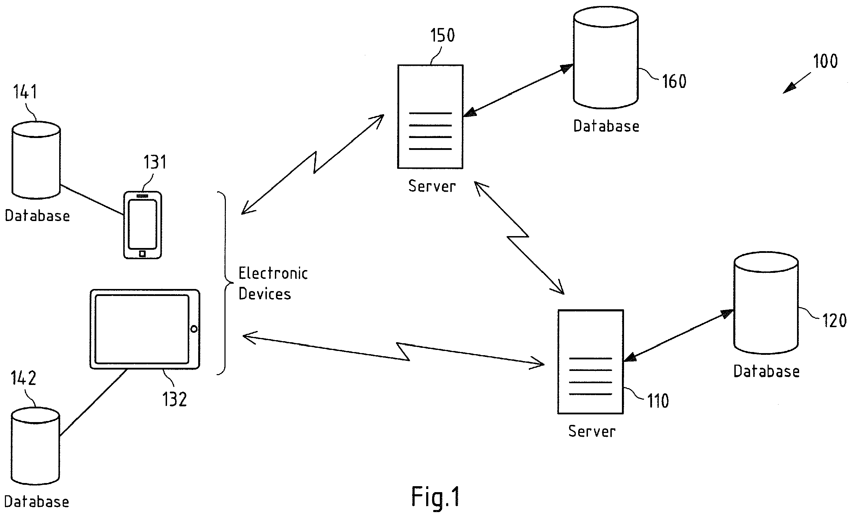

Fig. 1 is a schematic high-level block diagram of a system 100 according to an exemplary aspect of the present invention. System 100 comprises a server 110, which may alternatively be embodied as a server cloud (e.g. a plurality of server connected, e.g. via the internet and providing services at least partially jointly), another server 150, which may alternatively be embodied as a server cloud, and an electronic device 131,132, of which two different realizations are exemplarily shown: a mobile phone and a tablet (from top to bottom).

According to embodiments of the present invention, electronic device 131,132 may for instance request a sequence to be viewed by a user of the electronic device 131, 132, and is provided with one or more playback parameter values by server 110. Communication between electronic device 131,132 may for instance take place at least partially in a wireless fashion, e.g. based on cellular radio communication or on Wireless Local Area Network (WLAN) based communication, to name but a few non-limiting examples. In this way, mobility of electronic device 131, 132 can be guaranteed.

Pieces of audio and/or video information representing parts of one or more sequences may for instance be stored in a database. For instance, pieces of audio and/or video information may for instance be stored in database 160 being connectable to server 150, via which one or more of the pieces stored in the database 160 can be provided, e.g. to electronic device 131, 132. Further, electronic device 131, 132 may comprise or alternatively being connectable with a database 141, 142. For instance, after receiving one or more pieces of audio and/or video information, e.g. provided by server 110, or by server 150, the received pieces of audio and/or video information can be stored at the database 141,142. Stored pieces of audio and/or video information may for instance be used in different one or more sets of audio and/or video information representing one or more seamless sequences, in case the different set of audio and/or video information comprises the stored one or more pieces of audio and/or video information.

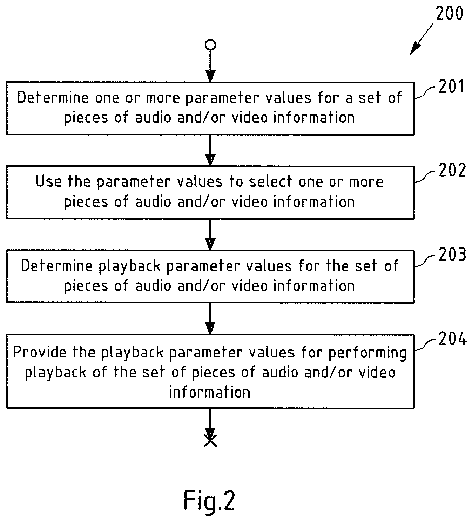

Server 110 comprises or is connectable to a database 120. The database 120 may for instance store profile information, based at least partially on which one or more parameter values are determined (see step 201 of Fig. 2). The stored profile information of database 120 may for instance be updateable, adaptable and/or changeable or may be added with further information and/or parameters, e.g. based on information being provided from electronic device 131, 132 to the server 110.

One or more Pieces of audio and/or video information being stored in database 160 may for instance be streamable files or non-streamable files.

Further details of an example method of the present invention performed by server 110 in order to provide the one or more playback parameter values, e.g. to electronic device 131, 132, are disclosed in the flow chart 200 of Fig. 2.

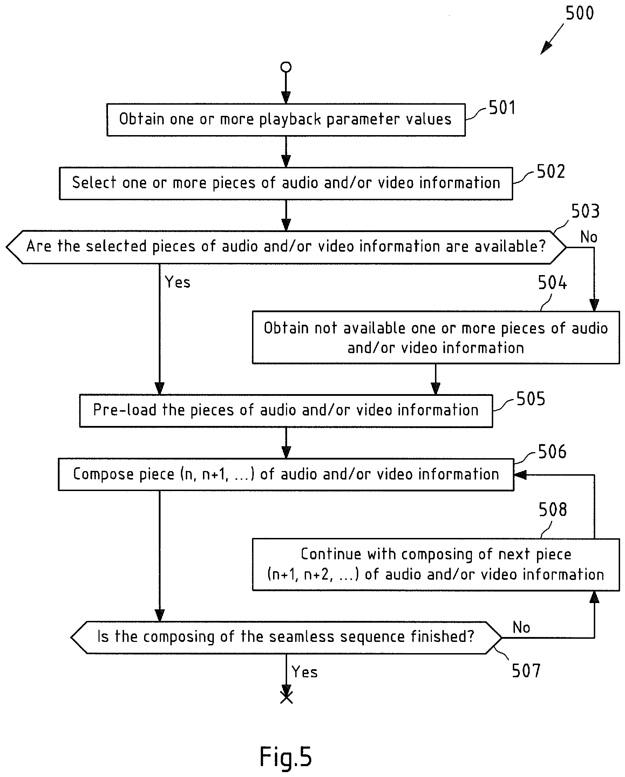

Further details of an example method of the present invention performed by electronic device 131, 132 in order to compose pieces of audio and/or video information based at least partially on the provided one or more playback parameter values, are disclosed in the flow chart 500 of Fig. 5.

Fig. 2 is a flowchart 200 showing an example embodiment according to the first exemplary aspect of the present invention. This flowchart 200 may for instance be performed by server 110 of Fig. 1.

In a first step 201, one or more parameter values for a set of pieces of audio and/or video information are determined. The one or more parameter values are determined based at least partially on pre-defined or determined according to pre-defined rules profile information. The profile information may for instance be stored in database 120 of Fig.1. The set of pieces of audio and/or video information represent a seamless video sequence, wherein the set of pieces of audio and/or video information consists of combinable pieces of audio and/or video information, e.g. stored in database 160 and/or database 120 of Fig. 1. The pieces of audio and/or video information are modular-like jointly connectable to each other forming a video sequence to be viewed by a user.

In step 202, the determined one or more parameter values are used to select one or more pieces of audio and/or video information. For instance, the one or more parameter values may for instance identify one or more pieces of audio and/or video information, which may be part of the video sequence.

In step 203, one or more playback parameter values for the set of pieces of audio and/or video information are determined. For instance, the one or more parameter values may be indicative of one or more identifiers for the pieces of audio and/or video information comprised by the set of pieces of audio and/or video information, so that each piece of audio and/or video information comprised by the set of pieces of audio and/or video information can be identified, e.g. after the one or more playback parameter values are provided, e.g. to the electronic device 131, 132 of Fig. 1. For instance, after the electronic device 131, 132 of Fig. 1 has received the one or more playback parameter values, it may for instance check whether or not at least one piece of the set of pieces of audio and/or video information is already stored locally, e.g. at the database 141,142 of Fig. 1. In this case, the stored pieces of audio and/or video information do not need to be transferred e.g. to the electronic device 131, 132 of Fig. 1 again. Further, the one or more parameter values may be indicative of control information for the set of piece of audio and/or video information, e.g. one piece of the set of pieces of audio and/or video information may for instance be repeated one or more times when played back e.g. by the electronic device 131, 132 of Fig. 1. Further, the one or more parameter values may be indicative of whether or not one or more pieces of the set of pieces of audio and/or video information are played back or not, e.g. some piece of audio and/or video information of the set of pieces of audio and/or video information may be only played back the first and/or second time, since e.g. the user viewing the played back set of pieces of audio and/or video information may for instance already know the content of said piece of audio and/or video information, or the user may for instance being not interested to be presented with the content of said piece of audio and/or video information another time.

In step 204, the determined one or more playback parameter values for performing playback of the set of pieces of audio and/or video information are provided (e.g. sent), e.g. from server 110 of Fig. 1 to electronic device 131, 132 of Fig. 1.

The exemplary flowchart 200 of Fig. 2 may for instance comprise one or more of the further features described above, for instance a check whether or not the composed set of pieces of audio and/or video information forms a seamless (video) sequence, and depending on the outcome of this check, a determining of another one or more parameter values for a set of pieces of audio and/or video information.

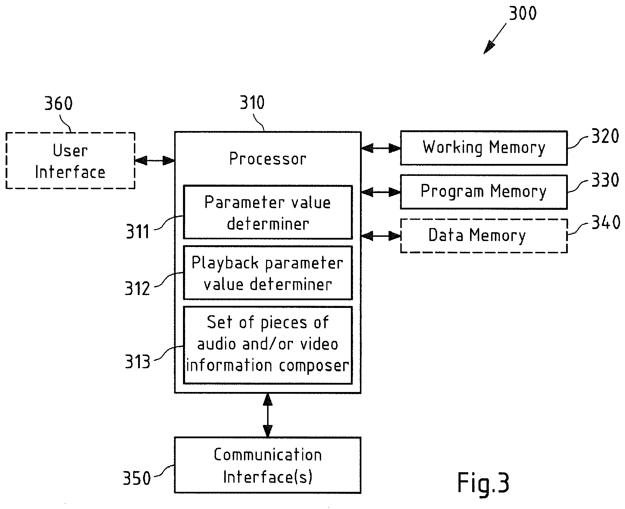

Fig. 3 is a schematic block diagram of an apparatus 300 according to an exemplary aspect of the present invention, which may for instance represent the electronic device 131, and/or 132 of Fig. 1. Alternatively, the schematic block diagram of the apparatus 300 according to an exemplary aspect of the present invention may for instance represent server 110 of Fig. 1.

Apparatus 300 comprises a processor 310, working memory 320, program memory 330, data memory 340, communication interface(s) 350, and an optional user interface 360.

Apparatus 300 may for instance be configured to perform and/or control or comprise respective means (at least one of 310 to 360) for performing and/or controlling the method according to the first exemplary aspect. Apparatus 300 may as well constitute an apparatus comprising at least one processor (310) and at least one memory (320) including computer program code, the at least one memory and the computer program code configured to, with the at least one processor, cause an apparatus, e.g. apparatus 300 at least to perform and/or control the method according to exemplary aspects of the invention.

Processor 310 may for instance comprise a parameter value determiner 311 as a functional and/or structural unit. Parameter value determiner 311 may for instance be configured to determine one or more parameter values (see step 201 of Fig. 2). Processor 310 may for instance comprise a playback parameter value determiner 312 as a functional and/or structural unit. Playback parameter value determiner 312 may for instance be configured to determine one or more parameter values (see step 204 of Fig. 2). Processor 310 may for instance comprise a set of pieces of audio and/or video information compiler 313 as a functional and/or structural unit. Set of pieces of audio and/or video information compiler 313 may for instance be configured to determine one or more parameter values (see step 204 of Fig. 2). Processor 310 may for instance further control the memories 320 to 340, the communication interface(s) 350, and the optional user interface 360.

Processor 310 may for instance execute computer program code stored in program memory 330, which may for instance represent a computer readable storage medium comprising program code that, when executed by processor 310, causes the processor 310 to perform the method according to the first exemplary aspect.

Processor 310 (and also any other processor mentioned in this specification) may be a processor of any suitable type. Processor 310 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 310 may for instance be an application processor that runs an operating system.

Program memory 330 may also be included into processor 310. This memory may for instance be fixedly connected to processor 310, or be at least partially removable from processor 310, for instance in the form of a memory card or stick. Program memory 330 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 330 may also comprise an operating system for processor 310. Program memory 330 may also comprise a firmware for apparatus 300.

Apparatus 300 comprises a working memory 320, for instance in the form of a volatile memory. It may for instance be a Random Access Memory (RAM) or Dynamic RAM (DRAM), to give but a few non-limiting examples. It may for instance be used by processor 310 when executing an operating system and/or computer program.

Data memory 340 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 340 may for instance store pieces of audio and/or video information.

Communication interface(s) 350 enable apparatus 300 to communicate with other entities, e.g. with server 110 of Fig. 1 and/or with server 150 of Fig. 1. The communication interface(s) 350 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 300 to communicate with other entities, for instance with server 110 of Fig. 1 and/or with server 150 of Fig. 1.

User interface 360 is optional and may comprise a display for displaying information to a user and/or an input device (e.g. a keyboard, keypad, touchpad, mouse, etc.) for receiving information from a user.

Some or all of the components of the apparatus 300 may for instance be connected via a bus. Some or all of the components of the apparatus 300 may for instance be combined into one or more modules.

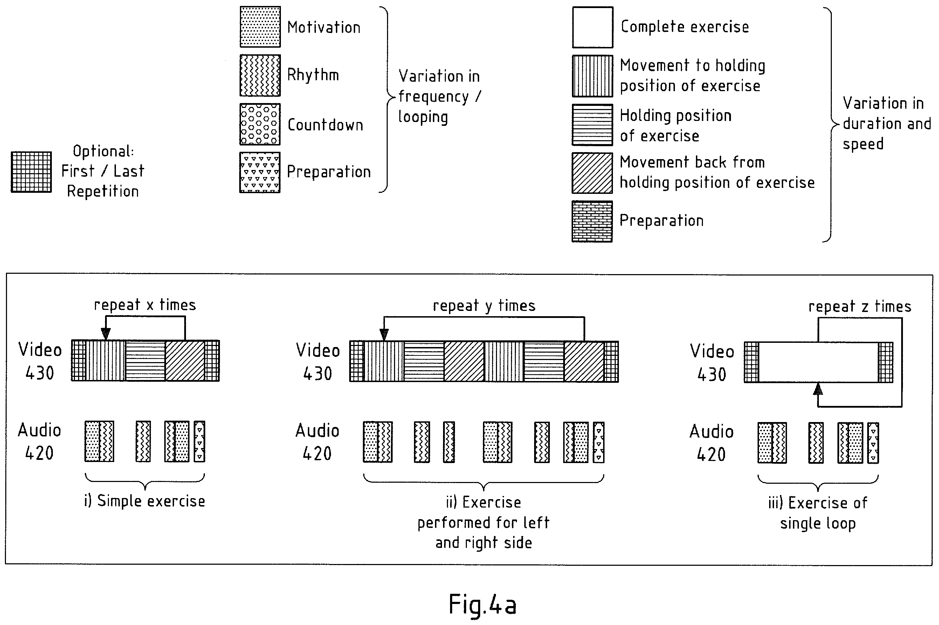

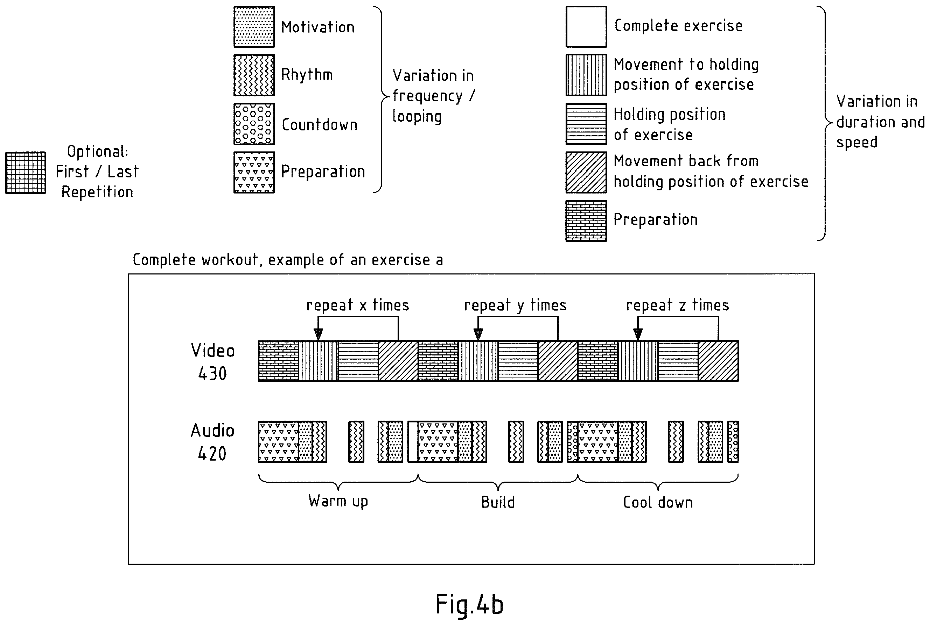

Fig. 4 is a schematic illustration of a set of pieces of audio and/or video information, for instance being used in a method according to the first and/or second exemplary aspect of the present invention.

Fig. 4a shows examples of composed sets of pieces of audio and/or video information. Three different composed sets of pieces of audio and/or video information are shown marked with i), ii) and iii). The pieces of video information are shown in the row marked with the reference numeral 430. The pieces of audio information are shown in the row marked with the reference numeral 420.

Together, the pieces of audio and/or video information (420 respectively 430) form a seamless sequence represented by the set of pieces of audio and/or video information, at hand the sets of pieces of audio and/or video information shown under i), ii) and iii). The content of the sets of pieces of audio and/or video information at hand is an exercise, e.g. a fitness exercise.

The legends shown in Fig. 4a and 4b show on the left hand side e.g. different pieces of audio information. At hand, a piece of audio information comprising motivation (al sounds), rhythm (sounds), countdown (sounds, e.g. spoken commands), and preparation (sounds, e.g. spoken commands). These pieces of audio information may for instance be varied by e.g. control parameters in the frequency of occurrence respectively may be looped one or more times to vary their frequency of occurrence, to name but a few non-limiting examples.

The legend shown in Fig. 4a and 4b shows on the right hand side, e.g. different pieces of video information. At hand, one or more pieces of video information for a movement to a holding position, a holding position, a movement back from a holding position, a preparation, and a pieces of video information representing e.g. a complete exercise can be comprised by the sets i) to iii) of pieces of audio and/or video information. Each respective piece of video information of the sets i) to iii) of pieces of audio and/or video information may for instance be varied by e.g. control parameters of duration and/or speed, to name but a few non-limiting examples.

The simple exercise, e.g. a push-up, shown in Fig. 4a i), comprises motivational pieces, rhythm pieces and countdown pieces of audio information. Further, the simple exercise shown in Fig. 4a i) comprises a movement to a holding position, a holding position, a movement back from a holding position. Optionally, the pieces of video information of the set i) of pieces of audio and/or video information may comprise a piece of video information representing content of a first and/or last repetition of the exercise formed by the pieces of video information of a movement to a holding position, a holding position, a movement back from a holding position. These three pieces of video information may for instance be repeated one or more times, e.g. depending on the intensity of the exercise, e.g. as comprised by a profile information.

The set ii) of pieces of audio and/or video information comprises at hand content representing an exercise to be performed at first by a first side and then by a second side, e.g. left arm/leg and then right arm/leg. This content represented by the set ii) of pieces of audio and/or video information may for instance be repeated as a whole, which may be varied by a corresponding control parameter.

The set iii) of pieces of audio and/or video information comprises at hand content representing a complete exercise, which may for instance be not suitable to be formed by a movement to a holding position, a holding position, a movement back from a holding position, e.g. jumping rope. Nevertheless, the piece of video information may for instance be varied by one or more control parameters varying e.g. duration or speed of the play back of the piece of video information.

Further, each exercise as content, e.g. represented by the sets i) to iii) of pieces of audio and/or video information may be formed by a first repletion, then a number of x repetitions, and a last repetition. The first repetition of an exercise may for instance be played back separated from the following loop forming a number of repetitions of the exercise. This may for instance be necessary since the first repetition of an exercise may not be suitable to form a looping representing a seamless sequence.
1. ,first rep' may for instance comprise pieces of video information for moving into a starting position of the exercise. Based on the starting position, the first repetition of the exercise can be performed.
2. 'nrep' may for instance comprise pieces of video information for a looping of the exercise, e.g. (a movement to a holding position, a holding position, a movement back from a holding position, optionally separated for exercise to be performed by a left and a right side, e.g. moving left arm/leg, moving right arm/leg, to name but a few non-limiting examples.
3. 'lastrep' may for instance comprise pieces of video information for performing a last repetition of the exercise and moving back into a starting position.

Fig. 4b shows at hand three composed sets of pieces of audio and/or video information, which are to be played back subsequently forming a complete workout. In contrast to the sets i) to iii) of pieces of audio and/or video information shown in Fig. 4a, a piece of audio and video information representing a preparation may be optionally comprised by the sets of pieces of audio and video information forming the complete workout. The preparation may for instance give a user instructions of how to perform the following exercise. In case the profile information of the user e.g. comprises an information being indicative of that the experience of the user is high, it may for instance not be necessary that such a piece of audio and video information representing preparation is comprised by the sets of pieces of audio and/or video information.

Each of the pieces of audio and/or video information of Fig. 4a and Fig. 4b may be associated with a playback parameter.

Pieces of audio and/or video information of the respective sets of pieces of audio and/or video information being positioned on top of each other respectively in the same column are to be played back simultaneously. For instance, the piece of video information of preparation of Fig. 4b is to be played back together with the piece of audio information representing preparation in Fig. 4b.

The pieces of video information marked with the term "Warm up", and the pieces of audio information marked with the same term "Warm up" of Fig. 4b may for instance belong to the category of a beginning part of the seamless sequence.

By varying one or more playback parameter values e.g. associated with one of the pieces of audio and/or video information, the content represented by the set of pieces of audio and/or video information can for instance be varied.

Additional pieces of audio and/or video information may for instance be played back with one or more pieces of the shown set of pieces of audio and/or video information.

For instance, the seamless sequence represented by the set of pieces of audio and/or video information

Fig. 5 shows a flowchart showing an example embodiment of a method according to the first exemplary aspect of the present invention, for instance performed by electronic device 131,132 of Fig. 1.

In step 501, one or more playback parameter values are obtained (e.g. received). The one or more playback parameter values may for instance be provided (e.g. see step 204 of Fig. 2.

In step 502, one or more pieces of audio and/or video information are selected, e.g. out of a plurality of pieces of audio and/or video information, e.g. stored in a database (e.g. database 160 of Fig.1).

In step 503, it is checked whether or not the selected pieces of audio and/or video information are available, e.g. are stored locally at the electronic device performing and/or controlling the flow chart 500. In case the selected pieces of audio and/or video information are not available, in step 504 the missing one or more pieces of audio and/or video information are e.g. downloaded, e.g. from server 150 of Fig. 1.

In step 505, the pieces of audio and/or video information are pre-loaded by the electronic device, e.g. loaded into a buffer of the electronic device.

In step 506, each respective piece of audio and/or video information is composed into a set of pieces of audio and/or video information according to the obtained one or more playback parameter values. For instance, the selected pieces of audio and/or video information of the set of pieces of audio and/or video information may for instance be composed into a container, the container forming a file, wherein at least one part of the container may for instance be provided (e.g. buffered), e.g. by the electronic device 131,132 of Fig. 1 to be able to play back the set of pieces of audio and/or video information. Further, the composing of the set of pieces of audio and/or video information may for instance comprise a checking whether or not the selected pieces form a seamless sequence.

In step 507, it is checked, e.g. no further piece of audio and/or video information needs to be composed. In case the composing is not finished, e.g. steps 506, 507 and additionally step 508 are repeated until the composing of the seamless sequence is finished.

In this way, it can be ensured that although the video sequence may comprise a plurality of pieces of audio and/or video information, and not just one file representing a continuous sequence, the sequence appears as one seamless sequence when being viewed by a user e.g. at the electronic device 131,132. Further, the content of the seamless sequence is composed according to the pieces of audio and/or video information and according to the playback parameter values varying the content of the seamless sequence.

The following embodiments shall also be considered to be disclosed:

### Embodiment 1:

A method, performed and/or controlled by at least one apparatus, the method comprising:
- determining one or more parameter values for a set of pieces of audio and/or video information, wherein the one or more parameter values are determined based at least partially on pre-defined or determined according to pre-defined rules profile information, and wherein the set of pieces of audio and/or video information represent a seamless sequence comprising (e.g. consisting of) combinable pieces of audio and/or video information;
- using the parameter values to select one or more pieces of audio and/or video information for the set of pieces of audio and/or video information;
- determining playback parameter values for the set of pieces of audio and/or video information based at least partially on the determined one or more parameter values; and
- providing the playback parameter values for performing playback of the set of pieces of audio and/or video information.

### Embodiment 2:

The method according to embodiment 1, wherein the seamless sequence comprises one or more interchangeable pieces of audio and/or video information, wherein the content represented by the seamless sequence is varied by interchanging at least one piece of audio and/or video information with at least one other piece of audio and/or video information.

### Embodiment 3:

The method according to any of the preceding embodiments, wherein each piece of the set of pieces of audio and/or video information is a playable datastream containing audio and/or video information.

### Embodiment 4:

The method according to embodiment 3, wherein the playable datastream is a streamable file or a not streamable file.

### Embodiment 5:

The method according to any of the preceding embodiments, wherein each respective piece of audio and/or video information is associated with one or more playback parameter values.

### Embodiment 6:

The method according to any of the preceding embodiments, wherein the one or more parameter values comprise a value being indicative of the order of the set of pieces of audio and/or video information.

### Embodiment 7:

The method according to any of the preceding embodiments, wherein the composed seamless sequence is represented by one playable datastream containing the pieces of audio and/or video information.

### Embodiment 8:

The method according to any of the preceding embodiments, wherein the profile information is adaptable according to predefined rules or is determined according to predefined rules.

### Embodiment 9:

The method according to any of the preceding embodiments, wherein the one or more parameter values are associated with at least one identifier for each piece of the set of pieces of audio and/or video information.

### Embodiment 10:

The method according to any of the preceding embodiments, wherein the one or more parameter values comprise at least one indication whether the pieces of audio and/or video information can form a seamless sequence or not.

### Embodiment 11:

The method according to any of the preceding embodiments, wherein the one or more pieces of audio and/or video information are associated with a category, wherein the one or more parameter values specify that at least one piece of the pieces of audio and/or video information of one or more pre-defined or determined according to pre-defined rules categories is comprised by the set of pieces of audio and/or video information.

### Embodiment 12:

The method according to embodiment 11, wherein the categories are associated with one or more of the following types i) to v) of categories with which each piece of audio and/or video information is associated with:
i) beginning part of the sequence;
ii) one or more pre-beginning parts of the sequence;
iii) one or more main parts of the sequence;
iv) one or more pre-final parts of the sequence;
v) final part of the sequence.

### Embodiment 13:

The method according to embodiment 12, wherein the one or more parameter values comprise at least one number information indicative of whether one or more pieces of audio and/or video information are restricted by a number of playbacks or not.

### Embodiment 14:

A method, performed by at least one electronic device, comprising:
- obtaining one or more playback parameter values;
- selecting one or more pieces of audio and/or video information for a set of pieces of audio and/or video information based at least partially on the obtained one or more playback parameter values;
- composing a seamless sequence based at least partially on the selected one or more pieces of audio and/or video information, and on the one or more playback parameter values.

### Embodiment 15:

The method according to embodiment 14, wherein the playback parameter values are indicative of control parameters for one or more pieces of the set of pieces of audio and/or video information, wherein the control parameters allow the play back of the composed one or more pieces of the set of pieces of audio and/or video information to be varied.

### Embodiment 16:

The method according to any of the embodiments 14 or 15, wherein the play back of the one or more pieces of the set of pieces of audio and/or video information is varied by one or more of the following types i) to vi) of control parameters:
i) speed control parameter varying the speed of the play back of at least a part of one or more pieces of the set of pieces of audio and/or video information;
ii) duration control parameter varying the duration of at least a part of one or more pieces of the set of pieces of audio and/or video information;
iii) looping control parameter influencing the repetition of one or more pieces of the set of pieces of audio and/or video information;
iv) backwards control parameter varying one or more pieces of the set of pieces of audio and/or video information to be played back backwards;
v) delay control parameter influencing the play back of one or more pieces of the set of pieces of audio and/or video information to be played back after a delay time has elapsed;
vi) pausing control parameter causing one or more pieces of the set of pieces of audio and/or video information to be paused for a pre-defined amount of time at a pre-defined position of the one or more pieces of the set of pieces of audio and/or video information.

### Embodiment 17:

The method according to any of the embodiments 14 to 16, wherein each respective piece of audio and/or video information of the set of pieces of audio and/or video information comprises at least two timestamps defining a position within a respective content of the respective piece of audio and/or video information, wherein the duration of the play back of at least one part of the piece of audio and/or video information defined by at least two consecutive timestamps is varied by the one or more playback parameter values.

### Embodiment 18:

The method according to any of the embodiments 14 to 17, wherein the composed seamless sequence is represented by one playable datastream containing the pieces of audio and/or video information.

### Embodiment 19:

The method according to any of the embodiments 14 to 18, wherein the composed seamless sequence is played back by an audio and/or video player.

### Embodiment 20:

The method according to any of the embodiments 14 to 19, wherein the playback of the composed set of pieces of audio and/or video information is performed by transmitting the required pieces of audio and/or video information as they are played back.

### Embodiment 21:

The method according to any of the embodiments 14 to 20, wherein the playback of the composed set of pieces of audio and/or video information is performed based at least partially on an obtained request.

### Embodiment 22:

The method according to any of the embodiments 14 to 21, wherein one piece of video information of the set of pieces of audio and/or video information is composed to be played back with one or more pieces of audio information.

### Embodiment 23:

An apparatus comprising at least one processor and at least one memory including computer program code, the at least one memory and the computer program code configured to, with the at least one processor, cause the apparatus to at least perform:
- determining one or more parameter values for a set of pieces of audio and/or video information, wherein the one or more parameter values are determined based at least partially on pre-defined or determined according to pre-defined rules profile information, and wherein the set of pieces of audio and/or video information represent a seamless sequence comprising (e.g. consisting of) combinable pieces of audio and/or video information;
- using the parameter values to select one or more pieces of audio and/or video information for the set of pieces of audio and/or video information;
- determining playback parameter values for the set of pieces of audio and/or video information based at least partially on the determined one or more parameter values; and
- providing the playback parameter values for performing playback of the set of pieces of audio and/or video information.

### Embodiment 24:

The apparatus according to embodiment 23, wherein the seamless sequence comprises one or more interchangeable pieces of audio and/or video information, wherein the content represented by the seamless sequence is varied by interchanging at least one piece of audio and/or video information with at least one other piece of audio and/or video information.

### Embodiment 25:

The apparatus according to any of the preceding embodiments, wherein each piece of the set of pieces of audio and/or video information is a playable datastream containing audio and/or video information.

### Embodiment 26:

The apparatus according to embodiment 3, wherein the playable datastream is a streamable file or a not streamable file.

### Embodiment 27:

The apparatus according to any of the preceding embodiments, wherein each respective piece of audio and/or video information is associated with one or more playback parameter values.

### Embodiment 28:

The apparatus according to any of the preceding embodiments, wherein the one or more parameter values comprise a value being indicative of the order of the set of pieces of audio and/or video information.

### Embodiment 29:

The apparatus according to any of the preceding embodiments, wherein the composed seamless sequence is represented by one playable datastream containing the pieces of audio and/or video information.

### Embodiment 30:

The apparatus according to any of the preceding embodiments, wherein the profile information is adaptable according to predefined rules or is determined according to predefined rules.

### Embodiment 31:

The apparatus according to any of the preceding embodiments, wherein the one or more parameter values are associated with at least one identifier for each piece of the set of pieces of audio and/or video information.

### Embodiment 32:

The apparatus according to any of the preceding embodiments, wherein the one or more parameter values comprise at least one indication whether the pieces of audio and/or video information can form a seamless sequence or not.

### Embodiment 33:

The apparatus according to any of the preceding embodiments, wherein the one or more pieces of audio and/or video information are associated with a category, wherein the one or more parameter values specify that at least one piece of the pieces of audio and/or video information of one or more pre-defined or determined according to pre-defined rules categories is comprised by the set of pieces of audio and/or video information.

### Embodiment 34:

The apparatus according to embodiment 11, wherein the categories are associated with one or more of the following types i) to v) of categories with which each piece of audio and/or video information is associated with:
i) beginning part of the sequence;
ii) one or more pre-beginning parts of the sequence;
iii) one or more main parts of the sequence;
iv) one or more pre-final parts of the sequence;
v) final part of the sequence.

### Embodiment 35:

The apparatus according to embodiment 12, wherein the one or more parameter values comprise at least one number information indicative of whether one or more pieces of audio and/or video information are restricted by a number of playbacks or not.

### Embodiment 36:

An electronic device comprising at least one processor and at least one memory including computer program code, the at least one memory and the computer program code configured to, with the at least one processor, cause the apparatus to at least perform:
- obtaining one or more playback parameter values;
- selecting one or more pieces of audio and/or video information for a set of pieces of audio and/or video information based at least partially on the obtained one or more playback parameter values;
- composing a seamless sequence based at least partially on the selected one or more pieces of audio and/or video information, and on the one or more playback parameter values.

### Embodiment 37:

The electronic device according to embodiment 36, wherein the playback parameter values are indicative of control parameters for one or more pieces of the set of pieces of audio and/or video information, wherein the control parameters allow the play back of the composed one or more pieces of the set of pieces of audio and/or video information to be varied.

### Embodiment 38:

The electronic device according to any of the embodiments 36 or 37, wherein the play back of the one or more pieces of the set of pieces of audio and/or video information is varied by one or more of the following types i) to vi) of control parameters:
i) speed control parameter varying the speed of the play back of at least a part of one or more pieces of the set of pieces of audio and/or video information;
ii) duration control parameter varying the duration of at least a part of one or more pieces of the set of pieces of audio and/or video information;
iii) looping control parameter influencing the repetition of one or more pieces of the set of pieces of audio and/or video information;
iv) backwards control parameter varying one or more pieces of the set of pieces of audio and/or video information to be played back backwards;
v) delay control parameter influencing the play back of one or more pieces of the set of pieces of audio and/or video information to be played back after a delay time has elapsed;
vi) pausing control parameter causing one or more pieces of the set of pieces of audio and/or video information to be paused for a pre-defined amount of time at a pre-defined position of the one or more pieces of the set of pieces of audio and/or video information.

### Embodiment 39:

The electronic device according to any of the embodiments 36 to 38, wherein each respective piece of audio and/or video information of the set of pieces of audio and/or video information comprises at least two timestamps defining a position within a respective content of the respective piece of audio and/or video information, wherein the duration of the play back of at least one part of the piece of audio and/or video information defined by at least two consecutive timestamps is varied by the one or more playback parameter values.

### Embodiment 40:

The electronic device according to any of the embodiments 36 to 39, wherein the composed seamless sequence is represented by one playable datastream containing the pieces of audio and/or video information.

### Embodiment 41:

The electronic device according to any of the embodiments 36 to 40, wherein the composed seamless sequence is played back by an audio and/or video player.

### Embodiment 42:

The electronic device according to any of the embodiments 36 to 41, wherein the playback of the composed set of pieces of audio and/or video information is performed by transmitting the required pieces of audio and/or video information as they are played back.

### Embodiment 43:

The electronic device according to any of the embodiments 36 to 42, wherein the playback of the composed set of pieces of audio and/or video information is performed based at least partially on an obtained request.

### Embodiment 44:

The electronic device according to any of the embodiments 36 to 43, wherein one piece of video information of the set of pieces of audio and/or video information is composed to be played back with one or more pieces of audio information.

### Embodiment 45:

An apparatus configured to perform and/or control or comprising respective means for performing and/or controlling the method of any of the embodiments 1 to 13.

### Embodiment 46:

An electronic device configured to perform and/or control or comprising respective means for performing and/or controlling the method of any of the embodiments 14 to 22.

### Embodiment 47:

An apparatus comprising at least one processor and at least one memory including computer program code, the at least one memory and the computer program code configured to, with the at least one processor, cause an apparatus at least to perform and/or control the method of any of the embodiments 1 to 13.

### Embodiment 48:

The apparatus according to the previous embodiment, wherein the apparatus is a server.

### Embodiment 49:

An electronic device comprising at least one processor and at least one memory including computer program code, the at least one memory and the computer program code configured to, with the at least one processor, cause an apparatus at least to perform and/or control the method of any of the embodiments 14 to 22.

### Embodiment 50:

A tangible computer-readable medium storing computer program code, the computer program code when executed by a processor causing an apparatus to perform and/or control:
- determining one or more parameter values for a set of pieces of audio and/or video information, wherein the one or more parameter values are determined based at least partially on pre-defined or determined according to pre-defined rules profile information, and wherein the set of pieces of audio and/or video information represent a seamless sequence comprising (e.g. consisting of) combinable pieces of audio and/or video information;
- using the parameter values to select one or more pieces of audio and/or video information;
- determining playback parameter values for the set of pieces of audio and/or video information based at least partially on the determined one or more parameter values; and
- providing the playback parameter values for performing playback of the set of pieces of audio and/or video information.

### Embodiment 51:

A tangible computer-readable medium storing computer program code, the computer program code when executed by a processor causing an apparatus to perform and/or control:
- obtaining one or more playback parameter values;
- selecting one or more pieces of audio and/or video information for a set of pieces of audio and/or video information based at least partially on the obtained one or more playback parameter values;
- composing a seamless sequence based at least partially on the selected one or more pieces of audio and/or video information, and on the one or more playback parameter values.

### Embodiment 52:

A system, comprising at least one apparatus for performing and/or controlling the method of any of the embodiments 1 to 13, and at least one electronic device for performing and/or controlling the method of any of the embodiments 14 to 22.

### Embodiment 53:

The system according to the previous embodiment, wherein the determined playback parameters are provided to the electronic device, in particular the determined playback parameters are provided from the server to the electronic device.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, performed by at least one apparatus, comprising:
- determining one or more parameter values for a set of pieces of audio and/or video information, wherein the one or more parameter values are determined based at least partially on pre-defined or determined according to pre-defined rules profile information, and wherein the set of pieces of audio and/or video information represent a seamless sequence comprising combinable pieces of audio and/or video information;
- using the parameter values to select one or more pieces of audio and/or video information for the set of pieces of audio and/or video information;
- determining playback parameter values for the set of pieces of audio and/or video information based at least partially on the determined one or more parameter values; and
- providing the playback parameter values for performing playback of the set of pieces of audio and/or video information.

2. The method according to claim 1, wherein each piece of the set of pieces of audio and/or video information is a playable datastream containing audio and/or video information, wherein preferably the playable datastream is a streamable file or a not streamable file.

3. The method according to any of the preceding claims, wherein each respective piece of the set of pieces of audio and/or video information is associated with one or more playback parameter values.

4. The method according to any of the preceding claims, wherein the one or more parameter values comprise a value being indicative of the order of the set of pieces of audio and/or video information.

5. The method according to any of the preceding claims, wherein the one or more parameter values comprise at least one indication whether the pieces of audio and/or video information can form a seamless sequence or not.

6. The method according to any of the preceding claims, wherein the one or more pieces of audio and/or video information are associated with a category, wherein the one or more parameter values specify that at least one piece of the pieces of audio and/or video information of one or more pre-defined or determined according to pre-defined rules categories is comprised by the set of pieces of audio and/or video information.

7. The method according to claim 6, wherein the categories are associated with one or more of the following types i) to v) of categories with which each piece of audio and/or video information is associated with:
i) beginning part of the sequence;
ii) one or more pre-beginning parts of the sequence;
iii) one or more main parts of the sequence;
iv) one or more pre-final parts of the sequence;
v) final part of the sequence.

8. The method according to claim 7, wherein the one or more parameter values comprise at least one number information indicative of whether one or more pieces of audio and/or video information are restricted by a number of playbacks or not.

9. A method, performed by at least one electronic device, comprising:
- obtaining one or more playback parameter values;
- selecting one or more pieces of audio and/or video information for a set of pieces of audio and/or video information based at least partially on the obtained one or more playback parameter values;
- composing a seamless sequence based at least partially on the selected one or more pieces of audio and/or video information, and on the one or more playback parameter values.

10. The method according to claim 9, wherein the playback parameter values are indicative of control parameters for one or more pieces of the set of pieces of audio and/or video information, wherein the control parameters allow the play back of the composed one or more pieces of the set of pieces of audio and/or video information to be varied.

11. The method according to claim 10, wherein the play back of the one or more pieces of the set of pieces of audio and/or video information is varied by one or more of the following types i) to vi) of control parameters:
i) speed control parameter varying the speed of the play back of at least a part of one or more pieces of the set of pieces of audio and/or video information;
ii) duration control parameter varying the duration of at least a part of one or more pieces of the set of pieces of audio and/or video information;
iii) looping control parameter influencing the repetition of one or more pieces of the set of pieces of audio and/or video information;
iv) backwards control parameter varying one or more pieces of the set of pieces of audio and/or video information to be played back backwards;
v) delay control parameter influencing the play back of one or more pieces of the set of pieces of audio and/or video information to be played back after a delay time has elapsed;
vi) pausing control parameter causing one or more pieces of the set of pieces of audio and/or video information to be paused for a pre-defined amount of time at a pre-defined position of the one or more pieces of the set of pieces of audio and/or video information.

12. The method according to any of the claims 9 to 11, wherein each respective piece of audio and/or video information of the set of pieces of audio and/or video information comprises at least two timestamps defining a position within a respective content of the respective piece of audio and/or video information, wherein the duration of the play back of at least one part of the piece of audio and/or video information defined by at least two consecutive timestamps is varied by the one or more playback parameter values.

13. The method according to any of the claims 9 to 12, wherein the composed seamless sequence is represented by one playable datastream containing the pieces of audio and/or video information.

14. The method according to any of the claims 9 to 13, wherein the composed seamless sequence is played back by an audio and/or video player.

15. The method according to any of the claims 9 to 14, wherein the playback of the composed set of pieces of audio and/or video information is performed based at least partially on an obtained request.
